# EUROPEAN PATENT APPLICATION

(11) **EP 2 037 402 A1**
(43) Date of publication of application: **18.03.2009**
(21) Application number: 07747901.2
(22) Date of filing: 18.04.2007
(51) Int. Cl.: G06Q 30/00

(54) **ACTION ON A RATE OF DISTRIBUTION OF GOODS WITH THE AID OF A BONUS METHOD AND SYSTEM**

(30) Priority: 13.06.2006 RU 2006120527
(71) Applicant: Eldarkhanova, Irina Borisovna, Moscow 107140 (RU)
(72) Inventor: ELDARKHANOV, Roman Adnanovich, Moscow, 107140 (RU); ELDARKHANOVA, Irina Borisovna, Moscow, 107140 (RU)
(74) Representative: Ketelaars, Maarten F.J.M.
(86) International application number: PCT/RU2007/000190
(87) International publication number: WO 2007/149009

(57) **Abstract**

Disclosed are a method for granting discounts or distributing prizes and a system for carrying out the same. An obj ect of the invention is enhancing interest of clients in making purchases at sale points or getting services at service provision points using the disclosed method and system. Clients are attracted because a client can get a discount for a purchased good, or a prize, with a certain probability at a moment of payment for a good or a service. To do this, a system is provided which joins a payment fixation means with a random sample generation means for sampling elements randomly, and if the random sample coincides with a predetermined sample, the client may get a discount. A probability of occurrence of a predetermined combination may be changed, in a manner external to the system and depending upon different conditions, by activating an input means presented in the random sample generation means.

## Description

### Field of the Invention

The present invention relates generally to a method and a system making a buyer/client able to get encourage associated with purchase of or payment for a good and/or a service.

Such a method and a system for carrying out the same allow attraction of clients to sale-of-goods/services point(s) which use the present invention. Attraction of clients to the sale-of-goods/services points allows increase in a sale-of-good/service rate both as a whole and for an individual range or types of goods/ services.

### Background of the invention

At present, cash registers (and other machines designed to fix a fact of payment for goods/services) are widely known, so wholesale and retail points as well as various points for selling tickets for railroad transport, air transport, theatre and cinema, and dry-cleaners, photo studios, insurance companies, tourist firms, beauty shops, taxi, car rental points, excursion firms, drugstores and any sale or service provision points are equipped therewith.

Technical means are also well known for lotteries of different types, for example, lottery drums, game machines, computerized apparatuses which directly implement a game process and which are associated with the concepts "player," "game machine," "win" and so on, in other words, the concepts directly associated with a game.

Known embodiments of technical means for gaming are disclosed, for example in RU Patents NºNº 2,181,066 and 2,160,141.

The patent document RU 2,181,066 ("Jackpot Gaming System") discloses an invention which describes an entertainment and gaming complex equipped with a computer system for collecting and processing data going through a network from end terminals. However, the purpose of the present complex is essentially to widen the functionality of the gaming complex in order to attract a greater number of players and to gain a greater income by owners of the gaming complex, respectively.

According to the document RU 2,160,141 the lottery is conducted using identification cards while lottery tickets are issued in an electronic form for which purpose the lottery organizers generate a data set identifying the electronic lottery tickets according to which the distribution of wins takes place.

Thus, the prior art solutions are directed to attract a client to take part in a lottery or a game, and to invite the client to make a wager in the form of payment for the cost of a lottery ticket and/or to pay this wager directly for the right to play on a game machine. In case of loss, the client losses money paid as a wager and has nothing in return.

Many different methods are also known for attracting buyers/clients to the sale-of-good/service points and for encouraging buyers/clients that make purchases (get services) at the present sale-of-good/service points on the regular basis or at a particular time or for large sums, etc. Among such methods, the following encouragements are prevalent: discounts or presents for purchases if the total cost thereof is higher than a certain sum; discounts provided in particular hours, days, weeks (in time); seasonal discounts; discounts according to discount cards; discounts for regular clients; accumulative discounts; and so on. A buyer knows all said discounts; they are "predictable" and usually are much smaller than cost of a good/service. At the same time, it is impossible to buy a good/service without payment for their cost (in other words, with the discount of 100% and more).

The method and system of the invention introduce a principally new approach to encouraging, in other words, they allow encouragement to buyers/clients resulting from appearance of predetermined combinations. This allows to increase an encouragement amount for a buyer or a client who has got a predetermined combination at comparable financial expenses (for discount granting variants already known at present) for attraction, retention and encouragement of buyers/clients.

### Summary of the Invention

In context of the present invention, the terms "a bonus," "a prize," a present" or "a right for a discount, a bonus, a prize or a present" are shortly denoted as "a bonus" while "a discount" is implied as "a monetary discount." In context of the present invention, the concept "encouragement" includes the concept "bonus" and/or "discount" and is used for conciseness.

The invention uses the constant need of people to make purchases or use services and makes them able to reduce their expenses or get additional incomes (in case if an encourage amount is greater than a purchase/service cost), in other words, to get an additional encouragement when applying to points of sale-of-good/service that use the system and method of the present invention. In accordance with the present invention, such ventures or organizations are sale-of-good/service points, for example, trade ventures and/or paid services provision organizations. According to the present invention, the sale-of-good/service points are provided with an additional device (a random sample generation means) connected or not connected with a payment fixation means, wherein use of said device makes it possible to implement the present invention (method). If a buyer/client is not encouraged at a sale-of-good/service point using the present invention, then, he or she does not bear any additional expenses but only pays a purchase made and/or a service provided as he or she usually deals with in any sale-of-good/service point not using the present invention.

An object of the claimed method and the encouragement system for carrying out the same is to attract buyers/clients and cause the enhanced interest in making a larger amount of good/service purchases for larger sums at ventures where there is a chance to reduce a cost for a good or a service to be bought due to encouragement in accordance with the present invention; besides, a buyer/client is able to get a good/service in a free-of-charge manner with the proviso for granting a discount of 100%. A variant of granting a discount of 100% and additional encouraging is possible. It should be noted that an encouragement can be higher (among others, significantly higher) than a cost of purchasing a good/service.

In addition, the method and system disclosed in the present invention allow stimulation of buyers/clients, purchase of a certain good/service and thereby acceleration of selling particular goods and services by making a buyer able to get an encouragement if the list of goods/services purchased by the buyer/client comprises a good/service whose sale is encouraged at present. This makes the sale-of good/service points able to stimulate sales of goods having large residuals, a limited shelf life time, low turnover, are in reduced demand, etc. (in context of the present invention - "promoted goods"). Predetermined parameters for a frequency of occurrence of predetermined combination, type and amount of an encouragement may have a significant effect on a rate of selling "promoted goods."

The inventive method and system allow stimulation of buyers to make purchases of goods of a particular manufacturer or name, that is, to increase sales of particular goods.

The invention is based on random occurrence of a combination of elements or one element (an element may also be a number, word(s), a letter, a digit, an image, a geometrical figure, a character, a symbol or combinations thereof, and so on), and if such an occurred combination coincides with a predetermined combination, a buyer/client is encouraged (gets a fixed or calculated monetary discount and/or a bonus).

The concept "predetermined combination" can imply both combination(s) or element(s) which occurrence causes encouragement and combination(s) or element(s) which occurrence does not result in granting a discount or a bonus. In context of the present invention, the concept "predetermined combination" implies a combination corresponding to encouragement.

A combination is generated directly at payment for a good and/or service purchase (encouragement in this case can be provided at place) or at additionally specified place and/or in additionally specified times (for example, if generation is performed directly at payment for a good and/or service purchase, then, a buyer/client may have also a chance to get encouragement at a specially dedicated counter, including an encouragement granted in a certain time). If a discount is paid at place, it can be subtracted from a purchase payment sum (a discount as such), and if it is greater than a purchase cost, then, a difference is paid out. It should be clarified that a combination may be generated at additionally specified place or in additionally specified times.

Predetermined occurring combinations may consist of element(s) (an element may also be a number, word(s), a letter, a digit, an image, a geometrical figure, a character, a symbol and so on, and also a combination thereof). It should be noted that a variant of multi-step encouragement occurrence is possible. For example, if an encouragement is in the form of a monetary discount, then, different components can take part in formation of this discount while a final result is a discount value in percents.

"A random sample generation means" is an electronic, mechanical, electromechanical or any other device which allows implementation of the present invention.

The invention provides systems that allow implementation of the present invention.
- A system comprising a purchase/service payment fixation means (a cash register or a device similar thereto in functions) and a random sample generation means. In this case, the purchase/service payment fixation means and the random sample generation means are separate devices and are connected by connection means to each other.
- A system comprising a purchase/service payment fixation means (a cash register or a device similar thereto in functions) and a random sample generation means. In this case, the purchase/service payment fixation means and the random sample generation means are located in one casing and represent a single device.
- A system comprising a purchase/service payment fixation means (a cash register or a device similar thereto in functions) and a random sample generation means. In this case, the purchase/service payment fixation means and the random sample generation means are not connected by connection means to each other.
   Various parameters can be established by programming a predetermined combination, for example,
- an encouragement (for example, a discount in percents) may depend upon a purchase sum or a number of purchased good units;
- an encouragement may depend upon a number of units of purchased one-name goods, or upon purchase of a good of a particular manufacturer;
- an encouragement may depend upon a number of visits to the present sale or service provision point.

It may be a great number of variants for the discount dependency upon additional factors, and the variants above serves as an illustrative example only of some ones. It is not principal for the present invention because in any case it allows additional attraction of buyers and increase of sales as well as provision of additional promotion of goods without additional attraction of human resources.

The present system can operate within a certain time interval, for example, beginning from 15:00 to 16:00 of a certain day, or operate during 24 hours per day or over a year and also during predetermined time intervals. It is not principal for the essence of the invention.

### Brief Description of Drawings

Fig. 1 illustrates a system according to one embodiment of the present invention;
Fig. 2 illustrates a system according to another embodiment of the present invention;
Fig. 3 illustrates a system according to still another embodiment of the present invention;
Fig. 4 illustrates a simplified flowchart for implementing the present invention.

### Detailed Description of the Invention

The system of the invention is meant for use in retail, wholesale and small-scale wholesale shops, cafes, motion-picture theaters, ticket sale points, insurance companies, banks, shoe-repair points, photo studios, tourist firms etc., in other words, at all places where goods are paid and paid services are provided. The invention is based on the idea of encouraging clients in order to increase their interest in making purchases at a sale or provision-of-service point equipped with the system or using the methods disclosed below, and also to account statistically a sale-of-good rate and influence on such rate by means of granting discount and bonuses with use of the present invention.

In use of the inventive system, during each procedure of payment for purchase in pressing a key on a payment fixation means (PFM) (or in any other method for activation of the payment fixation means using an input means, for example, in inputting data from a keypad, inputting data from a bar-code scanner, inserting a bankcard of a client, pressing down a bottom, switching a toggle switch over, transmitting a radio or light signal, making a magnetic or other action, and so no), a combination of elements is generated in the claimed system and in accordance with the claimed method, wherein if this generated (in other words, selected) combination of elements coincides with a predetermined combination, a client can get an encouragement. It should be noted that an activation button in some embodiments can be not on the payment fixation means but on the random sample generation means. It should be also noted that the input means in some embodiments coincides in the functionality thereof with the activation means.

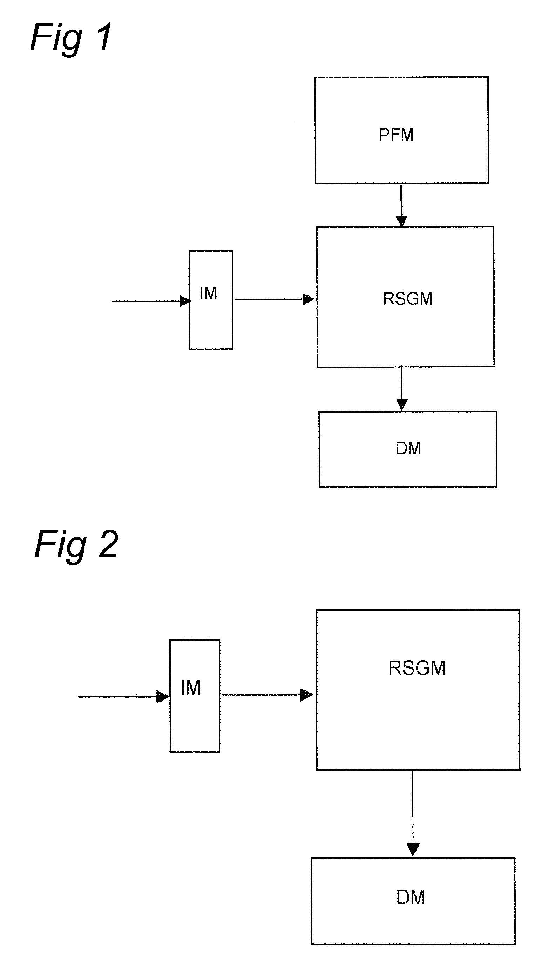

In one of preferred embodiments (Fig. 1) of the present invention, a system is provided comprising a good (or provided service) payment fixation means (PFM) and a random sample generation means (RSGM), said means being connected with each other by a connection means in such manner that pressing a certain key on the good payment fixation means results in generation of a respective signal, and a procedure of generating a random sample starts from this signal at the random sample generation means, while a result is shown at a display means being either a part of the random sample generation means or being a separate device but connected thereto. In other words, said devices can be provided with one or more (television, video, audio, and so on) information display devices.

In another embodiment, the system consists of a payment fixation means (that outputs a payment document (a cheque, a ticket, a receipt, etc.)) and a sample generation means as well as a display means (DM) and an input means (IM). The distinction from the previous embodiment consists in activation of the generation means through the input means (Fig. 1).

In still another embodiment of the present invention, a system (Fig. 2) consists of at least one random sample generation means and at least one input means by which a client (or a person serving the present sale point, for example, a seller) activates the random sample generation means. In response to activation of the input means, said random sample generation means generates a random combination of elements. Said system is provided with a display means similar to the display means of the previous embodiment. This embodiment of the invention may be used at places where the fact of payment should be confirmed by activation of a special means providing output of a document (for example, a printing device for printing information into a ticket if a cash register (CR) is absent), in other words, the system should have an output means for providing output of a document in case of payment with taking into account the encouragement. Such places are, for example, points for selling theater, train, and aircraft tickets, tourist vouchers, and so on, while a document which confirms the fact of payment is a ticket of a voucher or a contract for tourist services.

In another preferable embodiment of the present invention, a system consists of at least one random sample generation means and at least one input means whereby the random sample generation means is activated. In response to activation of the input means, said random sample generation means generates a random combination of elements. Said system is provided with a display means similar to the display means of the previous embodiment. This embodiment is applicable in case if any other document (a ticket, a policy, a contract, a receipt, and so on) or a special item (a token, a card, a chocolate plate, a badge or any other item that confirms the fact of payment) is outputted, and this item provides an access to activation of the random sample generation means.

Payment documents, including that for a certain sum, may also provide access to activation of the random sample generation means.

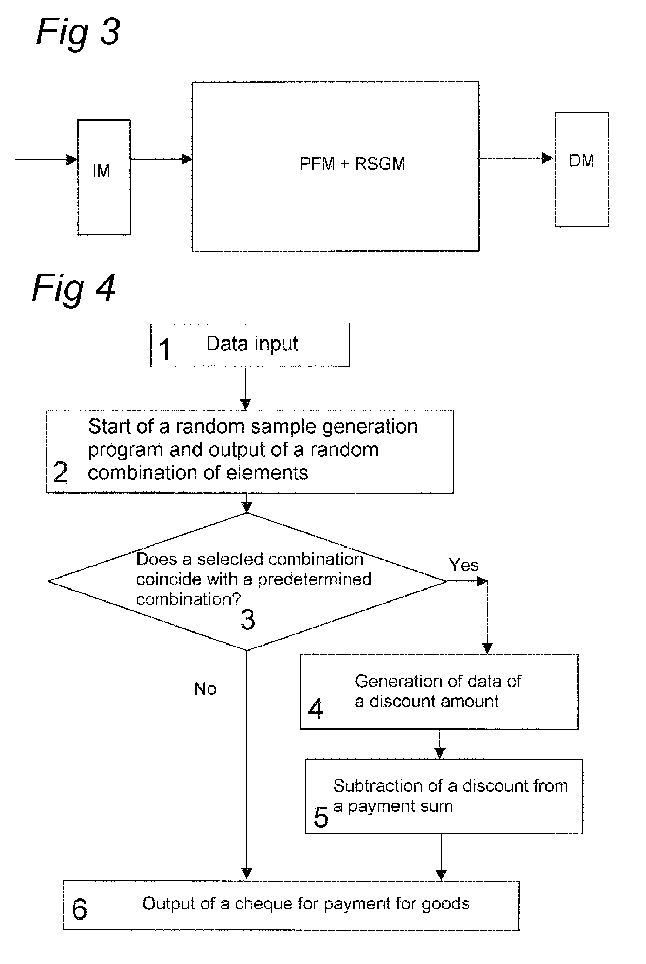

In still another embodiment (Fig. 3), a system can be implemented as a single device in the form of a universal CR based on a computer. In this case, such a computerized CR comprises said payment fixation means and random sample generation means electrically combined into a single device.

A final sum to be paid by a client may be calculated, with taking into account a result of random sampling, depending upon a system embodiment either at the payment fixation means or at the random sample generation means. Based on said data of the final sum, the payment fixation means provides a client with a document (for example, a cheque) with a sum to be paid out.

It should be noted that said embodiments of the invention provide for multiple variants described below, wherein they all fall into the scope of protection claimed by the present invention.

Depending upon predetermined parameters, the system for all embodiments may immediately calculate and show a discount value, for example, in percents of a payment sum or directly in a monetary sum, or the occurring elements are displayed by digits, symbols, words, characters, and so on, or a combination thereof. For all embodiments of the invention, at least one predetermined combination should be defined at the random sample generation means.

Encouragement may be established by established as dependent upon a sum to be paid, a purchased good assortment and/or a provided service and other parameters (a manufacturer, a type of goods, and so on) either individually or in combination thereof. Based on said conditions, a discount value is calculated. Methods of calculating a discount may be developed by skilled person in the evident manner. Another method of deriving a discount may be extraction of a discount value from a storage means that stores, for example, a lookup table for various discount grant conditions and discount values.

A maximum amount of a discount cannot be established equal to zero because even if any predetermined combination occurs in this case, a client is unable to get a discount owing to him or her, which contradicts to the idea of the invention. As indicated before, the maximum amount of a discount can be higher that a good or service cost. A minimum amount of a discount may be established equal to zero or larger then zero.

Units or devices capable to perform calculations are not a subject of the present invention and their detailed description is omitted. However, such units can be well-known computing devices based on a computer, a microprocessor, or special-purpose computing devices.

In one of preferred embodiments of the invention, the random sample generation means is a computer while the good payment fixation means is a cash register (CR). Said technical means may be connected with each other by known means, for example, by an interface, particularly via an RS232 input/output port of an USB port (connection means may be different for the present invention).

A random sampling procedure may be implemented using a random sample generation program written in any programming language and executable in a computer. Said procedure may be also implemented by firmware or only hardware.

The random sample generation program interacts with the cash register by means of a special program that has no effect on operation of the CR and does not prevent it from normal functioning.

However, not only a computer but any computing device operating under control of a program, that is, having no operating system in the broad sense of these words, can be the random sample generation means.

Irrespectively of a particular implementation of said means, more than one payment fixation means, organized or not organized into groups, may be coupled to the random sample generation means (Fig. 4). In this case, the random sample generation means generates a random sample for each detected activation in a predetermined manner of someone of coupled payment fixation means, displays the random sampling results on a display means to indicate identification information (for example, a CR number) of a respective payment fixation means, and transmits the random sampling results to the respective payment fixation means.

It should be noted that means for outputting a cheque or other document to a client are not shown in Figs. 1 to 4 in order to not complicate comprehension of the invention. "Activation in a predetermined manner" is understood as such activation of the payment fixation means (for example, pressing down a predetermined key such as SUBTOTAL or any other key programmed for this purpose on the CR) which results in initiation of operation of the random sample generation means. In addition, the step of "pressing down a predetermined key" may be substituted for other steps, exactly, pressing down a bottom, turning a knob, pressuring down a lever, inputting information from a bar-code scanner, inserting a bank card into a respective reading means and withdrawing a payment sum therefrom, as described above, in order to generate a signal for activation of the payment fixation means.

A result of generation of a random sample may be displayed to inform those around one about encouragement (about a discount with indication, for example, in percents or in cash, and/or about granting a bonus) by video or sound signals for attraction of clients' attention. In particular, such a means may be a computer monitor, however, any other display means, for example, a projection tableau, a "creeping line" tableau, projection-type display means, information of a cheque, and so on, may be used. Possible random sampling result display means and methods suitable to implement the present invention are not a subject of the present invention and their detailed description is omitted while the presence and structure of said means are evident for the skilled person.

Preferably, the display means is visible to both a sale point operator and buyers/clients from different locations of the payment fixation means, because said display means can simultaneously display the random sampling results for several payment fixation means, which allows additional attraction of clients. To adjust average sums of purchases, a stream of buyers by seasons, months, weeks, days, and particularly by hours in order to influence on a rate of selling individual or all goods based on the analysis of statistic information, amounts of granted discounts and/or bonuses may vary by periods using variation of respective data, for example a probability for selection of a predetermined combination, increase/decrease in a quantity of predetermined combinations, and so on. When several payment fixation means are coupled to one random sample generation means, the productivity of the random sample generation means, a rate of transmitting data through the connection means with the payment fixation means as well as a speed of outputting an image to the display means should provide minimization of a time for waiting the results by clients.

The connection means also are not a subject of the present invention and their detailed description is omitted. However, it is acceptable to use known connection means of computerized devices with known payment means, for example, using a cable or wire connection, using transmission of a (radio, optical, infrared, magnetic, sound and so on) signal. As indicated above, one of such connection means may be the RS-232 serial port (or any other interface cable). The connection means are not a subject to be considered within the present invention and therefore can be different.

In case if predetermined combinations (of elements or one element) occur in a random order, a client is informed of this fact and is provided with a discount or a bonus, an amount of which may be reported to the client in advance, in other words, before payment for a purchase or a service. If an occurred combination of elements is not a predetermined one, data concerning with absence of the discount or bonus is transmitted from the random sample generation means to the payment fixation means. In this case, the client pays a purchase in full.

Purchased good or provided service information may include, for example, a total sum of a purchase, a number of good units for each name of goods, a total number of good units, and so on. Discount information may include discounts for individual goods, for a total sum of a purchase, seasonal discounts, certain time intervals, discounts for goods and services during the advertising campaign, special discounts, and so on.

Operation of the system will be described below in more detail for a particular embodiment wherein the random sample generation means is a personal computer (PC) with a random sampling program executed thereon, the payment fixation means is a cash register (CR), for example, AMC-100Φ, and the connection means is an RS-232 interface. However, the operation principles are similar for other embodiment mentioned above as well.

It should be noted that any operating system (OS) can be installed on the computer. In doing so, the random sampling program and the random sample generation means itself should be capable of operating under control of the installed OS.

Referring to Fig. 4, a sale point operator (for example, a seller) inputs (step 1) data of made purchases in any known manner by pressing down respective keys on a cash register itself, by reading out a bar code (or a label with listed characteristics of a good) on the good by means of reading means designed thereto, as described above, when purchases are made. Then the operator presses down a predetermined key, for example a SUBTOTAL or TOTAL button, on the CR. The CR transmits the data of the made purchases through the connection means (RS-232 port) to the computer.

The computer interrogates the series port, and if data on the made purchase or bought service inputted from the CR are detected, the random sample generation program starts (step 1). The result of operation of the program is a random sample comprising a selected combination of elements displayed at the computer monitor. In a particular embodiment, the selected combination is displayed in the form of four occurring cards, that is, elements are cards. However, such a combination generally may be a set of combinations of cards, balls with numbers, dice, digits, images (pictures), and so on, as indicated above.

At step 3, the selected combination is compared with a predetermined combination. If the selected combination of cards coincides with the predetermined combination (which corresponds to encouragement), then, the computer generates (step 4) granted discount amount data by either extracting a fixed discount value from a memory device or by calculating such a discount on the basis of the purchase data received by the computer from the CR, data about purchased good or service provided to a client as well as information about maximum and minimum limit discount value. Then, the generated granted discount amount data is transmitted to the CR. The granted discount sum is subtracted (step 5) from the total cost of the purchased good at the CR, and then the CR outputs (step 6) a cheque to the client, said cheque indicating a sum to be paid with taking the discount into account.

If the occurred combination does not coincide any one of predetermined combinations, then, the computer transmits data that indicates zero discounts (in other words, the grant of the discount is impossible) or, in general, data indicating that encouragement is impossible, to the CR. Respective information is displayed on the computer monitor. Then the CR outputs a cheque to the client, said cheque indicating a sum to be paid without the discount.

Thus, the CR outputs the cheque to the client at step 6, said cheque indicating a sum to be paid.

For the purpose of monitoring, a program for recording all results of random selection of combinations and given encouragements to a special file may be used.

One of embodiments of the invention provides payment for purchases made or services provided using bank cards. In doing so, after reception of information from the computer with respect to a discount to be granted or not granted and after generation of a final result, a sum to be paid is withdrawn from a bank account of the client. In this connection, a way of mutual settlements between the sale point and the bank are performed by known technical means (for example, by electronic trade techniques) which have no relation to the essence of the claimed invention.

In another embodiment, the invention may be used in a sale point not equipped with CRs, for example, in selling theatre tickets.

For all possible embodiments in which predetermined combinations occur, such the predetermined combinations may be known to a client before he or she starts to pay for goods or services. Said predetermined combinations as well as granted discounts and bonuses may be changeable. For example, they may change every day. It is also possible that one of predetermined combinations corresponds to one value of a fixed discount (for, example, a 50% discount or a trip to Canary Islands as a bonus) in one day, and another granted bonus, for example, a bottle of brandy, corresponds to the same predetermined combination in the next day. To exclude possible misunderstandings, it is desirable that information about combinations of elements to be predetermined, and which bonus or discount corresponds to which combination, is accessible to a client before he or she makes a purchase or buys a service. It should be underlined, however, that at least one predetermined combination should be set at the random sample generation means.

An amount of a granted discount may be varied (for example, from 10% to 25%) while saving a fund for encouraging buyers, for example, by means of varying a number of variants from which selection is made. For instance, if selection should be made from 10 numbers while generating a random number, the probability of selecting a number is 0.1, and if selection is performed among 4 numbers, the probability of selecting a number is 0.25. Other possible methods for adjusting a probability of selecting a number (or a combination) are apparent to the skilled person, and their detailed description is omitted.

An encouragement value may also take into account a purchase sum or an amount of items or services bought, and may be either different or the same depending upon given conditions of a particular action.

It should be noted that said payment fact fixation means may be joined into a network of various configurations, which network joins payment points, sale and paid service provision points, that is, shops, cashiers' offices, cafes, etc in a network. For example, a plurality of supermarkets may be united into a net, wherein if a client addresses to one shop of this network, he can get a discount or a bonus which is raffled over the net of supermarkets as a whole.

In other embodiment, several payment fact fixation means may be united into groups while several such groups are coupled to one random sample generation means. According to the general idea of the invention, however, a structure of the network has no effect on the general principle underlying for the invention. Therefore, grouping of said means may be used in any combination.

Similarly, for sale points equipped not with CRs but only with a means resulting in activation of the random sample generation means, such sample generation means may be provided in the amount of one per each point or one per several sale or service provision points, in other words, said means may be joined into a network of arbitrary configuration (structure). At the same time, the sale points may be both positioned in one room and spaced from each other (positioned in another district, region, state, and so on).

It should be noted that a bonus may also be greater than a cost of a purchase or a service paid by a client or a buyer in a sale or service provision point.

## Claims

1. A method for granting a discount or a bonus to clients in a sale point the clients apply for purchase of goods or provision of services, said point being equipped by at least one random sample generation means having at least one input means and being connected to at least one good or service payment fixation means using a connection means, the method comprising the steps of:
actuating the at least one payment fixation means so as to generate data on purchased good or provided service and their costs;
generating a random sample in the random sample generation means to obtain a selected combination of elements as a random sampling result in response to receiving said data on purchased good or provided service and their costs from said at least one payment fixation means; and
generating data containing a granted discount sum or need-to-grant-bonus information in the random sample generation means,
receiving, in the payment fixation means, said data from the random sample generation means; and
generating, in the payment fixation means, a final sum of payment for a purchase made by a client at the sale point, with taking into account the received data on sum of granted discount or the information on the need-to-grant-bonus.

2. The method according to claim 1, **characterized in that** generating data in the random sample generation means comprising selecting a discount value from a storage means or calculating the discount value depending upon data on the purchased good or provided service and their costs.

3. The method according to claim 1, **characterized in that** the purchased good payment fixation means is a cash recorder (CA).

4. The method according to claim 1, **characterized in that** the random sample generation means is a computer.

5. The method according to claim 1, **characterized in that** the granted discount is nonzero if the selected combination coincides with one of predetermined combinations.

6. The method according to claim 5, **characterized in that** each predetermined combination may be changed using the input means of said random sample generation means,
wherein said change takes place before the random sample generation step.

7. The method according to claim 5, **characterized in that** a probability of occurrence of a predetermined combination may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

8. The method according to claim 5, **characterized in that** sum of the granted discount may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

9. The method according to claim 1, **characterized in that** the sale point is equipped with at least one display means, and the random sampling result is displayed at said at least one display means.

10. A method for granting a discount or a bonus to clients in a sale point the clients apply for purchase of goods or provision of services, said point being equipped by at least one random sample generation means having at least one input means and being connected to at least one good or service payment fixation means using a connection means, the method comprising the steps of:
actuating at least one payment fixation means to generate data on purchased good or provided service and their costs;
generating a random sample at the random sample generation means to generate a random sampling result in response to reception of said data on purchased good or provided service and their costs from said at least one payment fixation means; and
receiving, at the payment fixation means, the random sampling result transmitted from the random sample generation means;
generating, at the payment fixation means, data of sum of granted discount or need-to-grant bonus to client;
generating, at the payment fixation means, a final sum of payment with taking into account the generated data of sum of granted discount.

11. The method according to claim 10, **characterized in that** the generating data in the random sample generation means is performed by selecting a fixed discount value from a storage means or calculating the discount value depending upon the data on the purchased good or provided service and their costs.

12. The method according to claim 10, **characterized in that** the purchased good or service payment fixation means is a cash recorder (CA).

13. The method according to claim 10, **characterized in that** the random sample generation means is a computer.

14. The method according to claim 10, **characterized in that** the sum of granted discount is nonzero if a result of random sampling is a combination coinciding with one of predetermined combinations.

15. The method according to claim 14, **characterized in that** each predetermined combination may be changed using the input means of said random sample generation means,
wherein said change takes place before the random sample generation step.

16. The method according to claim 15, **characterized in that** a probability of occurrence of a predetermined combination may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

17. The method according to claim 15, **characterized in that** the sum of granted discount may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

18. The method according to claim 10, **characterized in that** the sale point is equipped with at least one display means, and the random sampling result is displayed at said at least one display means.

19. A system for granting a discount or a bonus to clients in a sale point the clients apply for purchase of goods or provision of services, the system comprising:
at least one payment fixation means providing generation of data on purchased good or provided service and their costs and generation of data of a final sum to be paid;
at least one random sample generation means having at least one input means and providing
generating a random sample and obtaining a selected combination as a random sampling result in response to receiving the data on purchased good or provided service and their costs from said at least one payment fixation means,
generating data containing a sum of granted discount or information on granting bonus based on the selected combination and transmitting the information on discount sum to the payment fixation means;
a connection means providing transmission of information between the payment fixation means and the random sample generation means.

20. The system according to claim 19, **characterized in that** it comprises a storage means for storing discount values corresponding to information on purchased good or provided service, said storage means providing output of the discount values in response to a request from the random sample generation means.

21. The system according to claim 19, **characterized in that** the purchased good or service payment fixation means is a cash recorder (CA).

22. The system according to claim 19, **characterized in that** the random sample generation means is a computer.

23. The system according to claim 19, **characterized in that** the sum of granted discount is nonzero if a result of random sampling is a combination coinciding with one of predetermined combinations.

24. The system according to claim 20, **characterized in that** each predetermined combination may be changed using the input means of said random sample generation means, wherein said change takes place before the random sample generation step.

25. The system according to claim 23, **characterized in that** a probability of occurrence of a predetermined combination may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

26. The system according to claim 19, **characterized in that** the sum of the granted discount may be changed at the storage means using the input means before the random sample generation step arbitrary or depending upon one of conditions selected from the group consisting of a purchase cost, a number of purchased good units, carrying out an advertising action, a seasonal sale, a special discount, and so on, or any combination thereof.

27. The system according to claim 19, **characterized in that** it comprises at least one display means, and the random sampling result is transmitted to said at least one display means for displaying thereof.

28. The system according to claim 27, **characterized in that** the display means is at last one audio device.

29. The system according to claim 27, **characterized in that** the display means is at last one video device.

30. The system according to claim 19, **characterized in that** the payment fixation means are joined into a network.

31. The system according to claim 19, **characterized in that** the random sample generation means and the payment fixation means form a single device.

32. A system for granting a discount or a bonus to clients in a sale point the clients apply for purchase of goods or provision of services, the system comprising:
at least one payment fixation means providing generation of data on purchased good or provided service and their costs;
at least one random sample generation means, having at least one input means and providing
generating a random sample and obtaining a selected combination as a random sampling result in response to receiving said data on purchased good or provided service and their costs from said at least one payment fixation means,
transmission of the random sampling result to the payment fixation means;
a connection means providing transmission of information between the payment fixation means and the random sample generation means,
wherein the payment fixation means is capable of generating data of a sum of granted discount or information on granted bonus based on the random sampling result, and capable of generating data of a final sum to be paid.

33. The system according to claim 32, **characterized in that** it comprises a storage means for storing discount values and provides output of a discount value in response to receiving of the data on purchased good or provided service and their costs from the payment fixation means.

34. The system according to claim 32, **characterized in that** the purchased good or service payment fixation means is a cash recorder (CA).

35. The system according to claim 32, **characterized in that** the random sample generation means is a computer.

36. The system according to claim 32, **characterized in that** the sum of granted discount is nonzero if the random sampling result is a combination coinciding with one of predetermined combinations.

37. The system according to claim 36, **characterized in that** each predetermined combination may be changed at the storage means using the input means of said random sample generation means, said change taking place before the random sample generation step.

38. The system according to claim 36, **characterized in that** a probability of occurrence of a predetermined combination may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

39. The system according to claim 32, **characterized in that** the sum of granted discount may be changed using the input means before the random sample generation step arbitrary or depending upon one of conditions selected from the group consisting of a purchase cost, a number of units of a purchased good, carrying out an advertising action, a seasonal sale, a special discount, and so on, or any combination thereof.

40. The system according to claim 32, **characterized in that** it comprises at least one display means, and the random sampling result is transmitted to said at least one display means for displaying thereof.

41. The system according to claim 40, **characterized in that** the display means is at last one audio device.

42. The system according to claim 40, **characterized in that** the display means is at last one video device.

43. The system according to claim 32, **characterized in that** the payment fixation means are joined into a network.

44. The system according to claim 32, **characterized in that** the payment fixation means and the random sample generation means form a single device.

45. A method for granting a discount or a bonus to clients in a sale point the clients apply for purchase of goods or provision of services, said point being equipped by at least one random sample generation means having at least one input means, the method comprising the steps of:
activating the input means to initiate, at the random sample generation means, obtaining a selected combination of elements as a random sampling result;
generating data containing a sum of granted discount as a result of retrieving a discount value from a storage means, or data indicating the need to grant a bonus.

46. The method according to claim 45, **characterized in that** the random sample generation means is a computer.

47. The method according to claim 45, **characterized in that** the sum of granted discount is nonzero if the random sampling result is a combination coincident with one of predetermined combinations.

48. The method according to claim 47, **characterized in that** each predetermined combination may be changed using the input means of said random sample generation means, wherein said change is performed before the random sample generation step.

49. The method according to claim 47, **characterized in that** a probability of occurrence of a predetermined combination may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

50. The method according to claim 47, **characterized in that** the sum of granted discount may be changed using the input means before the random sample generation step arbitrary or depending upon one of conditions selected from the group consisting of a purchase cost, a number of purchased good units, carrying out an advertising action, a seasonal sale, a special discount, and so on, or any combination thereof.

51. The method according to claim 45, **characterized in that** the sale point comprises at least one display means, and the random sampling result is transmitted to said at least one display means for displaying thereof.

52. The method according to claim 45, **characterized in that** the discount values corresponding to the information on purchased good or provided service and providing output of the discount values in response to a request from the random sample generation means are stored in the storage means.
